# EUROPEAN PATENT APPLICATION

(11) **EP 4 525 128 A1**
(43) Date of publication of application: **19.03.2025**
(21) Application number: 24183520.6
(22) Date of filing: 20.06.2024
(51) Int. Cl.: H01M 10/0587, H01M 50/536, H01M 50/595, H01M 10/0525

(54) **SECONDARY BATTERY AND METHOD OF FORMING THE SAME**

(30) Priority: 12.09.2023 KR 20230121022
(71) Applicant: SAMSUNG SDI CO., LTD., Giheung-gu Yongin-si, Gyeonggi-do 17084 (KR)
(72) Inventor: KIM, Sang Hyun, 17084 Yongin-si (KR); AHN, Jeong Chull, 17084 Yongin-si (KR); SEINO, Hiroshi, 17084 Yongin-si (KR); HONG, Sun Yang, 17084 Yongin-si (KR)
(74) Representative: Marks & Clerk LLP

(57) **Abstract**

A secondary battery and a method of forming the secondary battery are provided, and the secondary battery includes a first electrode plate including a first substrate having a first active material coated portion coated with a first active material and a first electrode uncoated portion not coated with the first active material; a second electrode plate including on a second substrate having a second active material coated portion coated with a second active material and a second electrode uncoated portion not coated with the second active material; a separator between the first electrode plate and the second electrode plate; an electrode tab connected to one of the first electrode uncoated portion and the second electrode uncoated portion; and an insulation member that covers the electrode tab and fixes the electrode tab to the first electrode plate or the second electrode plate. The insulation member has a non-adhesive region on one side at a position corresponding to the electrode tab and an adhesive area other than the non-adhesive region.

## Description

### BACKGROUND

### 1. Field

The present disclosure relates to a secondary battery.

### 2. Description of the Related Art

In general, a cylindrical secondary battery includes an electrode assembly wound in a cylindrical shape, a cylindrical can accommodating the electrode assembly and an electrolyte, and a cap assembly that is coupled to one end of the can to seal the can and that allows current generated in the electrode assembly to flow to an external device. The electrode assembly may include a positive electrode plate coated with a positive electrode active material, a negative electrode plate coated with a negative electrode active material, and a separator between the positive electrode plate and the negative electrode plate to prevent short circuit.

Cylindrical secondary batteries may use tabs as terminals for electrical connection. An uncoated portion of an electrode plate (active material-uncoated portion) may be formed, and a metal tab (e.g., aluminium for a positive electrode, and nickel/nickel plating and alloy for a negative electrode) may then be formed thereon.

However, when stress inside the electrode assembly increases due to the composition and components of the electrodes, burrs and cracks frequently occur to the electrode plates due to the thickness and strength of the tab.

For insulation, a tape that covers a tab may be attached to the tab and an uncoated portion. However, the attached tape may interfere with the stretching of a substrate, reducing the elongation rate, which lowers the tensile strength and makes it more vulnerable to cracks, compared to a tape-free case.

Accordingly, a method to solve this problem is needed.

The above information disclosed in this Background section is only for enhancement of understanding of the background of the invention and therefore it may contain information that does not constitute prior art.

### SUMMARY

The present disclosure provides a secondary battery capable of reducing the stress on an electrode substrate by removing an adhesive from a tape surface of an electrode tab area.

A secondary battery according to an embodiment of the present disclosure includes a first electrode plate including a first substrate having a first active material coated portion coated with a first active material and a first electrode uncoated portion not coated with the first active material; a second electrode plate including a second substrate having a second active material coated portion coated with a second active material and a second electrode uncoated portion not coated with the second active material; a separator between the first electrode plate and the second electrode plate; an electrode tab connected to one of the first electrode uncoated portion and the second electrode uncoated portion; and an insulation member that covers the electrode tab and fixes the electrode tab to the first electrode plate or the second electrode plate. The insulation member has a non-adhesive region on one side at a position corresponding to the electrode tab and an adhesive area other than the non-adhesive region.

The width (W) of the non-adhesive region may be in a range of W₁ ≤ W ≤ W₁+2W₂, where W₁ is the width of the electrode tab, and W₂ is the distance from one end of the electrode tab to one end of the first active material coated portion or to one end of the second active material coated portion.

The length (L) of the non-adhesive region may be in a range of L₁ ≤ L ≤ L₂, where L₁ is the length from the upper end of the first electrode uncoated portion to the lower end of the electrode tab or from the upper end of the second electrode uncoated portion to the lower end of the electrode tab, and L₂ is the length between the upper end and the lower end of the first electrode uncoated portion or the length between the upper end and the lower end of the second electrode uncoated portion.

The thickness (T2) of the adhesive region may be in a range of 0.1 *T1 ≤ T2 ≤ 1.5*T1, where T1 is the thickness of the electrode tab.

The thickness of the non-adhesive region may be smaller than the thickness of the adhesive region.

The adhesive region may be formed in an outer peripheral portion of the non-adhesive region.

The non-adhesive region may be a portion of the insulation member having no adhesive formed therein or having no adhesive force, and the adhesive region may be a remaining region of the insulation member having an adhesive formed therein or having an adhesive force.

The non-adhesive region may include a film having no adhesive formed therein or having no adhesive force, and the adhesive region may include a film having an adhesive formed therein or having an adhesive force.

The insulation member may be formed on the upper surface of the first electrode plate to cover the electrode tab, the first electrode uncoated portion, and a portion of the first active material coated portion, or may be formed on the upper surface of the second electrode plate to cover the electrode tab, the second electrode uncoated portion, and a portion of the second active material coated portion.

The insulation member may be on the upper surface of the first electrode plate to cover the electrode tab, the first electrode uncoated portion, and a portion of the first active material coated portion, and the insulation member may be in a same shape on the lower surface opposite to the upper surface of the first electrode plate at a position corresponding to the upper surface of the first electrode plate, or the insulation member may be formed on the upper surface of the second electrode plate to cover the electrode tab, the second electrode uncoated portion, and a portion of the second active material coated portion, and the insulation member may be in a same shape on the lower surface opposite to the upper surface of the second electrode plate at a position corresponding to the upper surface of the second electrode plate.

The present disclosure also relates to various embodiments of a method of making a secondary battery. In one embodiment, the insulation member may be formed by applying an adhesive to a film in which a mask pattern of a preset size is aligned at a preset position on one side of the film, so that the non-adhesive region is formed at a location of the film corresponding to the mask pattern, and the adhesive region is formed at a location of the film where the mask pattern is not applied.

In one embodiment, a method of forming the secondary battery includes applying an adhesive to a film; attaching the film to the first electrode plate or the second electrode plate; and removing a portion of the adhesive by applying or inserting a release material.

The release material may be prepared in the form of a liquid or film including at least one of silicon-based, amide-based, ceramic-based, and fluorine-based materials.

The film included in the insulation member may include polyimide (PI), polyethylene terephthalate (PET), or polypropylene (PP).

At least some of the above and other features of the invention are set out in the claims.

### BRIEF DESCRIPTION OF DRAWINGS

FIGS. 1, 2, and 3 are a perspective view, an exploded perspective view, and a cross-sectional view, respectively, showing a secondary battery according to an embodiment of the present disclosure.
FIG. 4 is a side view showing a first electrode tab and a first insulation member provided on a first electrode plate, according to an embodiment of the present disclosure, and shows the first insulation member provided only on the upper surface of a first substrate.
FIG. 5 is a plan view of the first electrode plate shown in FIG. 4.
FIG. 6 is a side view showing the first electrode tab and the first insulation member provided on the first electrode plate, according to the embodiment of the present disclosure, and shows the first insulation member provided on both sides of the first substrate.
FIG. 7 is a side view showing a second electrode tab and a second insulation member provided on a second electrode plate, according to an embodiment of the present disclosure, and shows the second insulation member provided only on the upper surface of a second substrate.
FIG. 8 is a plan view of the second electrode plate shown in FIG. 7.
FIG. 9 is a side view showing a second electrode tab and a second insulation member provided on a second electrode plate, according to an embodiment of the present disclosure, and shows the second insulation member provided on both sides of the second substrate.
FIG. 10 is a cross-sectional view showing a process of forming a first insulation member having a non-adhesive region by using a mask pattern, and attaching the first insulation member to a first substrate, according to an embodiment of the present disclosure.
FIG. 11 is a cross-sectional view showing the process of forming a first insulation member having a non-adhesive region by using a release material, and attaching the first insulation member to a first substrate, according to an embodiment of the present disclosure.

### DETAILED DESCRIPTION

Examples of the present disclosure are provided to more completely explain the present disclosure to those skilled in the art, and the following examples may be modified in various other forms. The present disclosure, however, may be embodied in many different forms and should not be construed as being limited to the example embodiments set forth herein. Rather, these example embodiments are provided so that this disclosure will be thorough and complete and will convey the aspects and features of the present disclosure to those skilled in the art.

In some embodiments, in the accompanying drawings, sizes or thicknesses of various components are exaggerated for brevity and clarity. Like numbers refer to like elements throughout. As used herein, the term "and/or" includes any and all combinations of one or more of the associated listed items. In some embodiments, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the disclosure. As used herein, the singular forms are intended to include the plural forms as well, unless the context clearly indicates otherwise. It will be further understood that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present disclosure.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in some embodiments to the orientation depicted in the figures. For example, if the element or feature in the figures is turned over, elements described as "below" or "beneath" other elements or features would then be oriented "on" or "above" the other elements or features. Thus, the exemplary term "below" can encompass both an orientation of above and below.

Hereinafter, a secondary battery 100 according to embodiments of the present disclosure will be described in detail with reference to the accompanying drawings.

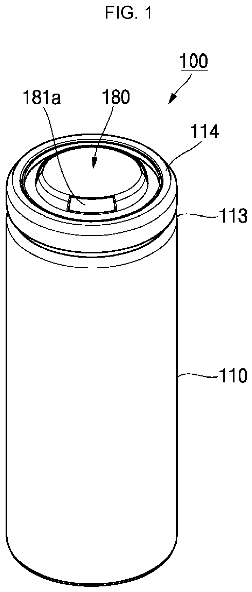

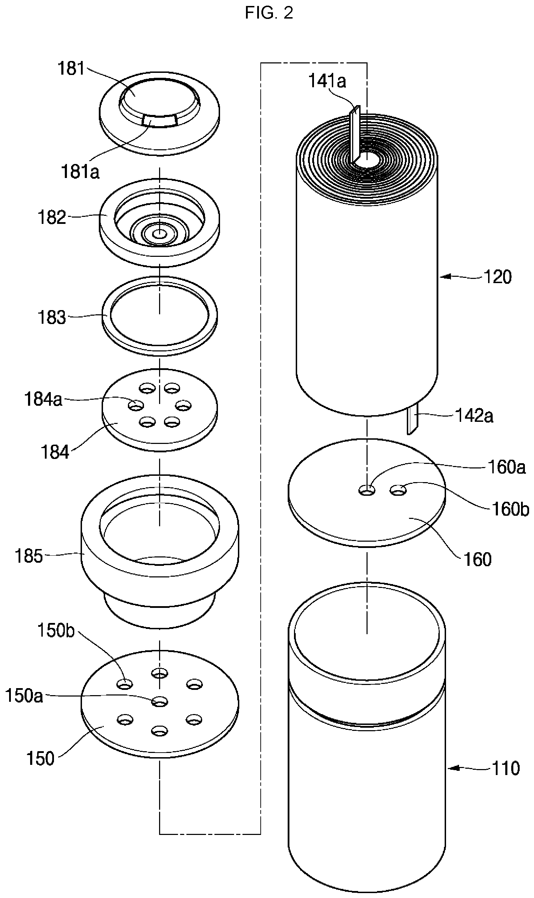

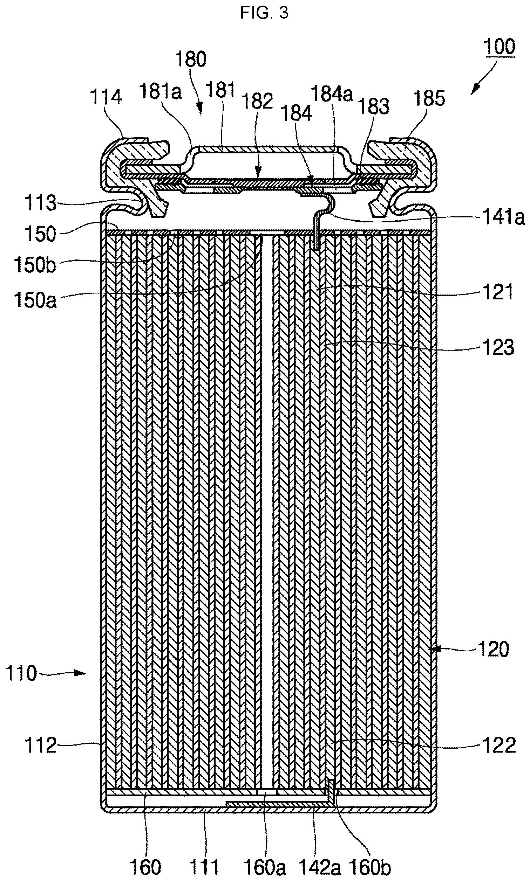

FIGS. 1, 2, and 3 are a perspective view, an exploded perspective view, and a cross-sectional view, respectively, showing a secondary battery according to an embodiment of the present disclosure.

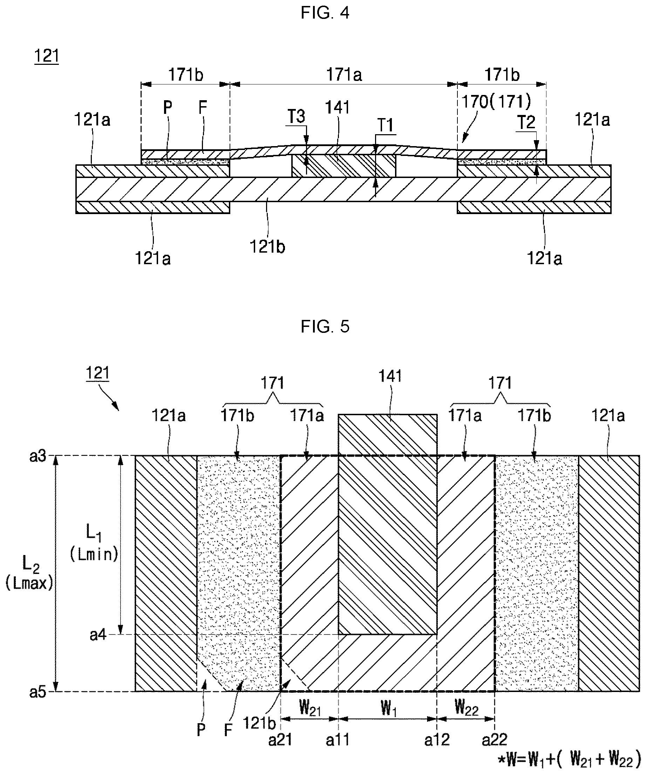

Referring to FIGS. 1, 2, and 3, the secondary battery 100 according to an embodiment of the present disclosure may include a cylindrical can 110, a cylindrical electrode assembly 120, a separator 123, an upper insulating plate 150, a lower insulating plate 160, and a cap assembly 180. Referring to FIGS. 4 to 8, the secondary battery 100 further includes an insulation member 170.

The can 110 may include a circular bottom portion 111 and a cylindrical side portion 112 extending upward from the bottom portion 111 for a predetermined length. During the secondary battery manufacturing process, the top portion of the cylindrical can 110 may be open. Therefore, during the assembly process of the secondary battery, the electrode assembly 120 may be inserted into the cylindrical can 110 together with an electrolyte.

The cylindrical can 110 may include steel, a steel alloy, aluminium, an aluminium alloy, or equivalents thereof. In the present embodiment, the can 110 may include or be referred to as a case or housing. In the present embodiment, the cylindrical can 110 has a beading part 113 recessed inward and downward around the cap assembly 180 to prevent the electrode assembly 120 and the cap assembly 180 from being separated to the outside and may include a crimping part 114 bent inward around the cap assembly 180.

The electrode assembly 120 may be accommodated inside the cylindrical can 110. The electrode assembly 120 may include a first electrode plate 121, a second electrode plate 122, and a separator 123 between the first electrode plate 121 and the second electrode plate 122. In the present embodiment, the first electrode plate 121 may be a positive electrode plate, and the second electrode plate 122 may be a negative electrode plate. In one or more embodiments, the first electrode plate 121 may be a negative electrode plate, and the second electrode plate 122 may be a positive electrode plate. Hereinafter, for convenience of explanation, the embodiment where the first electrode plate 121 is a positive electrode plate and the second electrode plate 122 is a negative electrode plate will be described.

In one or more embodiments, the electrode assembly 120 may include a positive electrode plate 121 including a first active material coated portion 121a coated with a positive electrode active material (e.g., transition metal oxide (LiCoO₂, LiNiO₂, LiMn₂O₄, etc.)), a negative electrode plate 122 including a second active material coated portion 122a coated with a negative electrode active material (e.g., graphite, carbon, etc.), and a separator 123 located between the positive electrode plate 121 and the negative electrode plate 122 to prevent short circuit and only allow movement of lithium ions. Hereinafter, for convenience of explanation, the first active material coated portion 121a and the second active material coated portion 122a are described as the positive active material coated portion 121a and the negative active material coated portion 122a, respectively.

The positive electrode plate 121, the negative electrode plate 122, and the separator 123 may be wound in a substantially cylindrical shape. In this embodiment, the positive electrode plate 121 may include an aluminium (Al) foil, the negative plate 122 may include a copper (Cu) or nickel (Ni) foil, and the separator 123 may include polyethylene (PE) or polypropylene (PP).

As described above, the positive electrode plate 121 has at least one surface of a plate-shaped metal foil made of aluminium (Al) coated with a positive electrode active material made of a transition metal oxide. The positive electrode plate 121 may include at the upper end a first electrode uncoated portion 121b that is not coated with a positive electrode active material. The first electrode uncoated portion 121b may protrude upward from the electrode assembly 120. In one or more embodiments, the first electrode uncoated portion 121b of the positive electrode plate 121 may protrude further upward compared to the negative electrode plate 122 and the separator 123.

As described above, the negative electrode plate 122 has at least one surface of a plate-shaped metal foil made of copper (Cu) or nickel (Ni) coated with a negative electrode active material made of graphite or carbon. The negative electrode plate 122 may include at the lower end a second electrode uncoated portion 122b that is not coated with a negative electrode active material. The second electrode uncoated portion 122b may protrude downward from the electrode assembly 120. In one or more embodiments, the negative electrode plate 122 may protrude further downward compared to the positive electrode plate 121 and the separator 123.

The first electrode uncoated portion 121b may be a positive electrode uncoated portion, and the second electrode uncoated portion 122b may be a negative electrode uncoated portion, but in one or more embodiments, the first electrode uncoated portion 121b may be a negative electrode uncoated portion, and the second electrode uncoated portion 122b may be a positive electrode uncoated portion. Hereinafter, for convenience of explanation, the case where the first electrode uncoated portion 121b is a positive electrode uncoated portion and the second electrode uncoated portion 122b is a negative electrode uncoated portion will be described.

In the present embodiment, a first electrode tab 141 that protrudes upward by a predetermined length may be provided at the positive uncoated portion 121b of the positive electrode plate 121, and a second electrode tab 142 that protrudes by a predetermined length may be provided at the negative uncoated portion 122b of the negative electrode plate 122, but in one or more embodiments the first electrode tab 141 may protrude upward from the negative uncoated portion 122b of the negative electrode plate 122, and a second electrode tab 142 may protrude downward from the positive uncoated portion 121b of the positive electrode plate 121.

In the present embodiment, the first electrode tab 141 is cut from the positive electrode uncoated portion 121b, and thus may include the same material as the positive electrode uncoated portion 121b, for example, aluminium. In some embodiments, the second electrode tab 142 is cut from the negative electrode uncoated portion 122b, and thus may include the same material as the negative electrode uncoated portion 122b, for example, copper or nickel. The first electrode tab 141 may be a positive electrode tab, and the second electrode tab 142 may be a negative electrode tab. In one or more embodiments, the first electrode tab 141 may be a negative electrode tab, and the second electrode tab 142 may be a positive electrode tab. Hereinafter, for convenience of explanation, the embodiment where the first electrode tab 141 is a positive electrode tab and the second electrode tab 142 is a negative electrode tab will be described. The positive electrode tab 141 of the electrode assembly 120 may be connected to the cap assembly 180, and the negative electrode tab 142 may be connected to the bottom portion 111 of the cylindrical can 110. However, the positive electrode tab 141 and the cap assembly 180 on the upper side may be electrically connected by a first lead tab 141a welded to the positive electrode tab 141. In some embodiments, the negative electrode tab 142 and the bottom portion 111 may be electrically connected to a second lead tab 142a welded to the negative electrode tab 142. In the present embodiment, the positive electrode tab 141 and the cap assembly 180 are connected by the first lead tab 141a, and the negative electrode tab 142 and the bottom portion 111 are connected by the second lead tab 142a, but in one or more embodiments they may be directly connected without a separate lead tab.

The electrode assembly 120 may be referred to as an electrode group or electrode. In the present embodiment, the negative electrode tab 142 of the electrode assembly 120 may be welded to the bottom portion 111 of the cylindrical can 110 or connected by the second lead tab 142a, as described above. Therefore, the cylindrical can 110 may operate as a negative electrode. In one or more embodiments, the positive electrode tab 141 may be connected to the bottom portion 111 of the cylindrical can 110, and in this embodiment, the cylindrical can 110 may operate as a positive electrode.

The upper insulating plate 150 may be coupled to the cylindrical can 110, and a first hole 150a may be formed in the center and a plurality of second holes 150b may be formed outside and around the first hole 150a. Additionally, the upper insulating plate 150 may be between the electrode assembly 120 and the cap assembly 180. The upper insulating plate 150 may prevent the electrode assembly 120 from electrically contacting the cap assembly 180. In the present embodiment, the upper insulating plate 150 may prevent the positive electrode plate 121 of the electrode assembly 120 from electrically contacting the cap assembly 180.

The first hole 150a can allow gas to quickly move to the cap assembly 180 when a large amount of gas is generated due to an abnormality in the secondary battery. In the present embodiment, one of the second holes 150b may allow the positive electrode tab 141 or the first lead tab 141a to pass through the upper insulating plate 150 and to be welded to the cap assembly 180. In some embodiments, the remaining second holes 150b may allow the electrolyte to quickly flow into the electrode assembly 120 during the electrolyte injection process.

The lower insulating plate 160 is coupled to the cylindrical can 110, and a first hole 160a may be formed in the center and a second hole 160b may be formed at the outside thereof. In some embodiments, the lower insulating plate 160 may be between the electrode assembly 120 and the bottom portion 111. The lower insulating plate 160 may prevent the electrode assembly 120 from electrically contacting the bottom portion 111 of the cylindrical can 110. In the present embodiment, the lower insulating plate 160 may prevent the negative electrode plate 122 of the electrode assembly 120 from electrically contacting the bottom portion 111.

When a large amount of gas is generated due to an abnormality in the secondary battery, the first hole 160a may allow the gas to quickly move upward. In some embodiments, the second hole 160b may allow the negative electrode tab 142 or the second lead tab 142a to pass through the lower insulating plate 160 and to be welded to the bottom portion 111.

The insulation member 170 may include at least one of a first insulation member 171 and a second insulation member 172. In one or more embodiments, the first insulation member 171 may be attached to an area of the positive electrode tab 141 of the positive electrode plate 121, and the second insulation member 172 may be attached to an area of the negative electrode tab 142 of the negative electrode plate 122. A more detailed description of the insulation member 170 will be provided later.

The cap assembly 180 may include a cap-up 181 having a plurality of through holes 181a, a safety vent 182 located below the cap-up 181, a connecting ring 183 located below the safety vent 182, and a cap-down 184. In the present embodiment, the cap-down 184 may be located below the safety vent 182 and the connecting ring 183, may include a plurality of through holes 184a, and may be connected to the positive electrode tab 141 or the first lead tab 141a. In the present embodiment, the cap assembly 180 may further include an insulating gasket 185 that insulates the cap-up 181, the safety vent 182, and the cap-down 184 from the side portion 112 of the cylindrical can 110.

The insulating gasket 185 may be compressed between the beading part 113 and the crimping part 114 formed on the side portion 112 of the substantially cylindrical can 110. In the present embodiment, the through holes 181a of the cap-up 181 and the through holes 184a of the cap-down 184 may discharge internal gas to the outside when abnormal internal pressure occurs inside the cylindrical can 110.

The internal gas may invert the safety vent 182 upward through the through holes 184a of the cap-down 184, and thus the safety vent 182 can be electrically separated (disconnected) from the cap-down 184. Subsequently, as the safety vent 182 is torn or otherwise broken (opened), the internal gas may be released to the outside through the through holes 181a of the cap-up 181.

An electrolyte (not shown) may be injected into the cylindrical can 110. This allows lithium ions generated by electrochemical reactions to move between the negative electrode plate 122 and the positive electrode plate 121 inside the battery during charging and discharging. The electrolyte may include a non-aqueous organic electrolyte solution that is a mixture of a lithium salt and a high-purity organic solvent. In the present embodiment, the electrolyte may include a polymer or solid electrolyte using a polymer electrolyte.

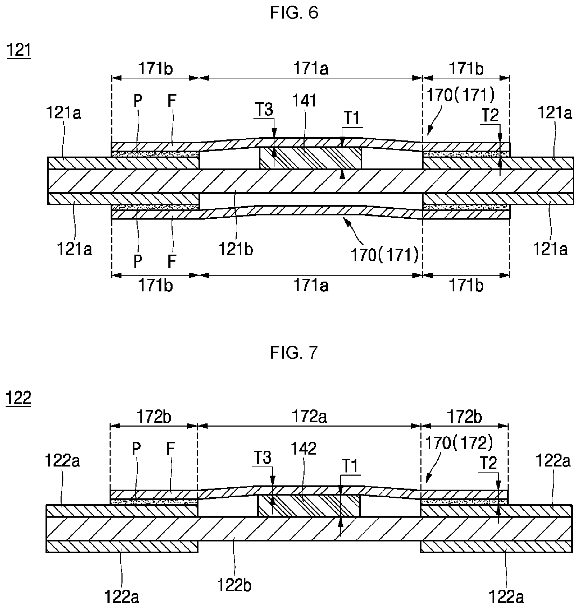

FIG. 4 is a side view showing a first electrode tab and a first insulation member provided on a first electrode plate, according to an embodiment of the present disclosure. FIG. 4 also shows the first insulation member provided only on the upper surface of a first substrate. FIG. 5 is a plan view of the first electrode plate shown in FIG. 4, and FIG. 6 is a side view showing the first electrode tab and the first insulation member provided on the first electrode plate, according to the embodiment of the present disclosure. FIG. 6 also shows the first insulation member provided on both sides of the first substrate.

The first insulation member 171 according to the embodiment of the present disclosure covers at least a portion of the positive electrode tab 141 and fixes the positive electrode tab 141 to the positive electrode plate 121, as shown in FIG. 4, and may include a first non-adhesive region 171a formed on one surface at a position corresponding to the positive electrode tab 141, and a first adhesive region 171b as a region other than the first non-adhesive region 171a formed in the outer peripheral portion of the first non-adhesive region 171a.

In one surface of the first insulation member 171 according to the present embodiment, the first non-adhesive region 171a is a partial region of the first insulation member 171 having no adhesive formed therein or having no adhesive force (or substantially no adhesive force), and the first adhesive region 171b may be defined as the remaining region of the first insulation member 171 having an adhesive formed therein or having an adhesive force.

As shown in FIG. 5, the width W of the first non-adhesive region 171a may be in the range of W₁ ≤ W ≤ W₁+2W₂. Here, W₁ may mean the width of the positive electrode tab 141, and W₂ may mean the distance from one end a11, a12 of the positive electrode tab 141 to one end a21, a22 of the first active material coated portion 121a. When the first electrode uncoated portion 121b is formed between the first active material coated portions 121a, W₂ includes, on the basis of the positive electrode tab 141, the distance W₂₁, which is a distance between the left end a11 of the positive electrode tab 141 to the right end a21 of the first active material coated portion 121a, and the distance W₂₂, which is a distance between the right end a12 of the positive electrode tab 141 to the left end a22 of the first active material coated portion 121a, and thus 2*W₂ may be applied, assuming that the positive electrode tab 141 is located at the exact center of the first electrode uncoated portion 121b.

The length L of the first non-adhesive region 171a may be in the range of L₁ ≤ L ≤ L₂, as shown in FIG. 5. Here, L₁ may mean the length from the upper end a3 of the first electrode uncoated portion 121b to the lower end a4 of the positive electrode tab 141, and L₂ may mean the length between the upper end a3 and the lower end a5 of the first electrode uncoated portion 121b.

In this way, the first non-adhesive region 171a according to the present embodiment may have an area greater than or equal to the area where the positive electrode tab 141 is in contact with the first electrode uncoated portion 121b and less than or equal to the area of the first electrode uncoated portion 121b (that is, the maximum area not exceeding the first active material coated portion 121a), and thus there is no portion where the positive electrode tab 141 overlaps the first adhesive region 171b due to the size and positioning of the first non-adhesive region 171a.

The thickness T2 of the first adhesive region 171b may be in the range of 0.1 *T1 ≤ T2 ≤ 1.5*T1, as shown in FIG. 4. Here, T1 may mean the thickness of positive electrode tab 141. When the overall thickness of the first insulation member 171 according to the present embodiment is excessively greater than the positive electrode tab 141, this is disadvantageous in terms of cell capacity, and thus the thickness T2 of the first adhesive region 171b may be a maximum of 150% of the thickness T1 of the positive electrode tab 141. In some embodiments, in order to ensure that there is no problem with an insulation function, the lower limit of the thickness T2 of the first adhesive region 171b may be 10% or more of the thickness T1 of the positive electrode tab 141. Accordingly, the thickness T3 of the first non-adhesive region 171a may be formed to be relatively smaller than the thickness T2 of the first adhesive region 171b.

The first non-adhesive region 171a according to the present embodiment may include a film having no adhesive formed therein or having no adhesive force (or substantially no adhesive force), and the first adhesive region 171b may include a film having an adhesive formed therein or having an adhesive force.

As shown in FIG. 5, the first insulation member 171 according to the present embodiment may be formed on the upper surface of a first substrate (positive electrode plate) so as to cover the positive electrode tab 141 (or at least the portion of the positive electrode tab 141 in contact with the first electrode uncoated portion 121b), the first electrode uncoated portion 121b, and the first active material coated portion 121a. In other embodiments, as shown in FIG. 6, the first insulation member 171 according to the present embodiment may be additionally formed in the same shape on the lower surface opposite to the upper surface of the first substrate (positive electrode plate). In this way, the first insulation member 171 may be formed to have the same structure and shape on both the upper surface of the first substrate (positive electrode plate) where the positive electrode tab 141 is located and the bottom surface where the positive electrode tab 141 is not located.

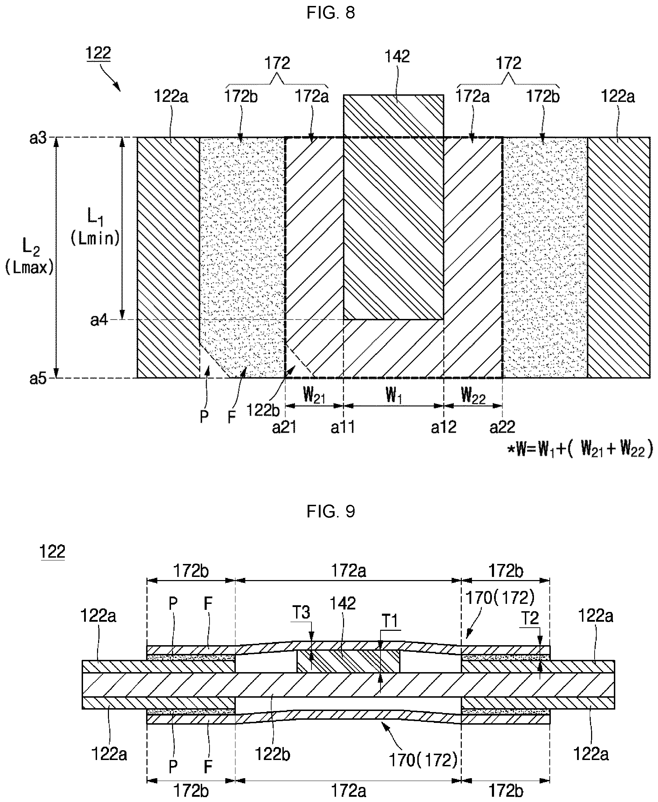

FIG. 7 is a side view showing a second electrode tab and a second insulation member provided on a second electrode plate, according to an embodiment of the present disclosure. FIG. 7 also shows the second insulation member provided only on the upper surface of a second substrate. FIG. 8 is a plan view of the second electrode plate shown in FIG. 7, and FIG. 9 is a side view showing a second electrode tab and a second insulation member provided on a second electrode plate, according to an embodiment of the present disclosure. FIG. 9 also shows the second insulation member provided on both sides of the second substrate.

The second insulation member 172 according to the embodiment of the present disclosure covers at least a portion of the negative electrode tab 142 and fixes the negative electrode tab 142 to the negative electrode plate 122, as shown in FIG. 7, and may include a second non-adhesive region 172a formed on one surface at a position corresponding to the negative electrode tab 142, and a second adhesive region 172b as a region other than the second non-adhesive region 172a formed in the outer peripheral portion of the second non-adhesive region 172a.

In one surface of the second insulation member 172 according to the present embodiment, the second non-adhesive region 172a is a partial region of the second insulation member 172 having no adhesive formed therein or having no adhesive force (or substantially no adhesive force), and the second adhesive region 172b may be defined as the remaining region of the second insulation member 172 having an adhesive formed therein or having an adhesive force.

As shown in FIG. 8, the width W of the second non-adhesive region 172a may be in the range of W₁ ≤ W ≤ W₁+2W₂. Here, W₁ may mean the width of the negative electrode tab 142, and W₂ may mean the distance from one end a11, a12 of the negative electrode tab 142 to one end a21, a22 of the second active material coated portion 122a. When the second electrode uncoated portion 122b is formed between the second active material coated portions 122a, W₂ may include, on the basis of the negative electrode tab 142, the distance W₂₁, which is a distance between the left end a11 of the negative electrode tab 142 to the right end a21 of the second active material coated portion 122a, and the distance W₂₂, which is a distance between the right end a12 of the negative electrode tab 142 to the left end a22 of the second active material coated portion 122a, and thus 2*W₂ may be applied, assuming that the negative electrode tab 142 is located at the exact center of the second electrode uncoated portion 122b.

The length L of the second non-adhesive region 172a may be in the range of L₁ ≤ L ≤ L₂, as shown in FIG. 8. Here, L₁ may mean the length from the upper end a3 of the second electrode uncoated portion 122b to the lower end a4 of the negative electrode tab 142, and L₂ may mean the length between the upper end a3 and the lower end a5 of the second electrode uncoated portion 122b.

In this way, the second non-adhesive region 172a according to the present embodiment may have an area greater than or equal to the area where the negative electrode tab 142 is in contact with the second electrode uncoated portion 122b and less than or equal to the area of the second electrode uncoated portion 122b (that is, the maximum area not exceeding the second active material coated portion 122a), and thus there is no portion where the negative electrode tab 142 overlaps the second adhesive region 172b due to size and positioning of the second non-adhesive region 172a.

The thickness T2 of the second adhesive region 172b may be in the range of 0.1*T1 ≤ T2 ≤ 1.5*T1, as shown in FIG. 7. Here, T1 may mean the thickness of negative electrode tab 142. When the overall thickness of the second insulation member 172 according to the present embodiment is excessively greater than the negative electrode tab 142, this is disadvantageous in terms of cell capacity, and thus the thickness T2 of the second adhesive region 172b may be a maximum of 150% of the thickness T1 of the negative electrode tab 142. In some embodiments, in order to ensure that there is no problem with an insulation function, the lower limit of the thickness T2 of the second adhesive region 172b may be 10% or more of the thickness T1 of the negative electrode tab 142. Accordingly, the thickness T3 of the second non-adhesive region 172a may be formed to be relatively smaller than the thickness T2 of the second adhesive region 172b.

The second non-adhesive region 172a according to the present embodiment may include a film having no adhesive formed therein or having no adhesive force (or substantially no adhesive force), and the second adhesive region 172b may include a film having an adhesive formed therein or having an adhesive force. In the present embodiment, the film forming an insulation member may include, but not limited to polyimide (PI), polyethylene terephthalate (PET), or polypropylene (PP), and any material that can be used as an insulating tape may be used.

The second insulation member 172 according to the embodiment of the present disclosure may be formed on the upper surface of a second substrate (negative electrode plate) so as to cover the negative electrode tab 142 (or at least the portion of the negative electrode tab 142 in contact with the second electrode uncoated portion 122b), the second electrode uncoated portion 122b, and a portion of the second active material coated portion 122a, as shown in FIG. 8. In other embodiments, as shown in FIG. 9, the insulation member may be additionally formed in the same shape on the lower surface opposite to the upper surface of the second substrate (negative electrode plate) at a position corresponding to the upper surface of the second substrate (negative electrode plate). In this way, the second insulation member 172 may be formed to have the same structure and shape on both the upper surface of the second substrate (negative electrode plate) where the negative electrode tab 142 is located and the bottom surface where the negative electrode tab 142 is not located.

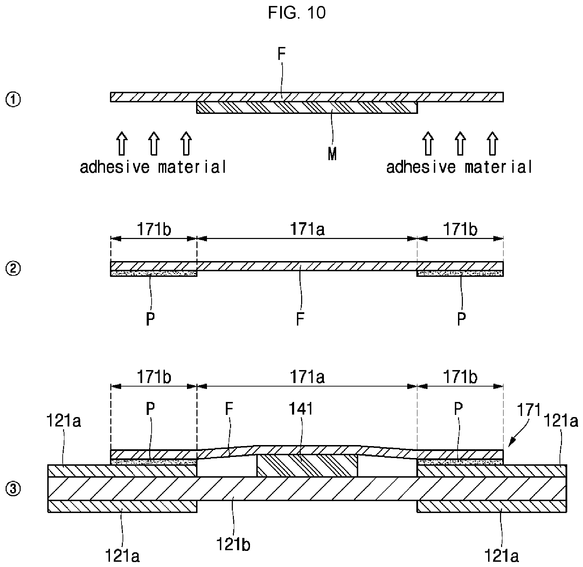

FIG. 10 is a cross-sectional view showing a process of forming a first insulation member having a non-adhesive region by using a mask pattern, and attaching the first insulation member to a first substrate, according to an embodiment of the present disclosure.

Referring to FIG. 10, first, a mask pattern M of a preset size is aligned at a preset position (e.g., a center portion) at one side (e.g., a lower surface) of a film F, and an adhesive or adhesive material P is then applied to the one side (e.g., the lower surface).

Thereafter, when the mask pattern M is removed, a first non-adhesive region 171a is formed at a location of the film F corresponding to the mask pattern M, and a first adhesive region 171b is formed at a location of the film where the mask pattern M was not applied, thereby forming the first insulation member 171 according to the present embodiment to then be attached to the positive electrode tab 141.

Because the process of forming and attaching the second insulation member 172 according to the present embodiment is the same as that of the above-described first insulation member 171, a detailed description of the process of forming and attaching the second insulation member 172 will be omitted.

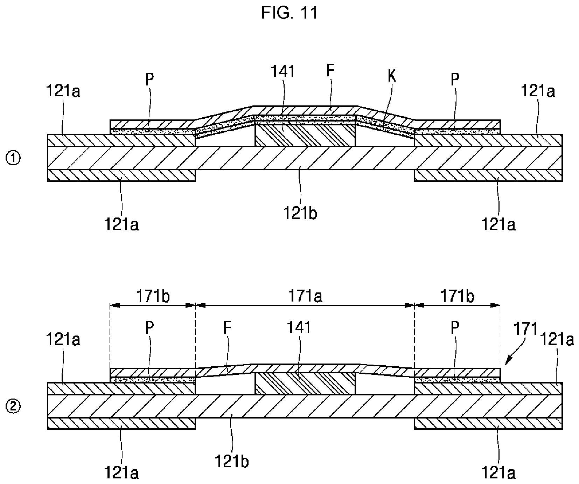

FIG. 11 is a cross-sectional view showing the process of forming a first insulation member having a non-adhesive region by using a release material, and attaching the first insulation member to a first substrate, according to an embodiment of the present disclosure.

Referring to FIG. 11, first, when a film F having an adhesive surface by an adhesive P is attached to the positive electrode plate 121, in order to remove the adhesive P, a liquid-type release material K is applied to or a film-type release material K is inserted into a portion of the adhesive surface of the film F, where a predefined non-adhesive region 171a is to be formed, and the corresponding film F is then attached.

Thereafter, the first non-adhesive region 171a having the adhesive P removed therefrom is formed at the position where the release material K is applied or inserted, and the adhesive region 171b by the adhesive P is formed at the position where the release material K is not applied or inserted, thereby forming the first insulation member 171 according to the present embodiment to then be attached to the positive electrode tab 141.

The release material according to this embodiment may be prepared in the form of a liquid or film including at least one of silicon-based, amide-based, ceramic-based, and fluorine-based materials, but is not limited thereto, and any material that can remove the adhesive may be used.

In some embodiments, a guide line indicating a non-adhesive region may be formed in the insulation member according to the present embodiment, thereby facilitating formation or preparation of the non-adhesive region, and making it possible to place the non-adhesive region at a correct location when an insulation member is attached.

As described above, the secondary battery according to the embodiment of the present disclosure can reduce the stress on an electrode substrate by removing an adhesive on the tape surface of an electrode tab area.

While the foregoing embodiment is only one embodiment for carrying out the present disclosure, which is not limited to the embodiment, it will be understood by a person skilled in the art that various changes in form and details may be made therein without departing from the scope of the present disclosure as defined by the following claims.

## Claims

1. A secondary battery comprising:
a first electrode plate comprising a first substrate having a first active material coated portion coated with a first active material and a first electrode uncoated portion not coated with the first active material;
a second electrode plate comprising a second substrate having a second active material coated portion coated with a second active material and a second electrode uncoated portion not coated with the second active material;
a separator between the first electrode plate and the second electrode plate;
an electrode tab connected to one of the first electrode uncoated portion and the second electrode uncoated portion; and
an insulation member covering at least a portion of the electrode tab and fixing the electrode tab to the first electrode plate or the second electrode plate, the insulation member comprising a non-adhesive region on one side at a position corresponding to the electrode tab and an adhesive area other than the non-adhesive region.

2. The secondary battery as claimed in claim 1, wherein a width (W) of the non-adhesive region is in a range of W₁ ≤ W ≤ W₁+2W₂, where W₁ is a width of the electrode tab, and W₂ is the distance from one end of the electrode tab to one end of the first active material coated portion or to one end of the second active material coated portion.

3. The secondary battery as claimed in claim 1 or claim 2, wherein a length (L) of the non-adhesive region is in a range of L₁ ≤ L ≤ L₂, where L₁ is a length from an upper end of the first electrode uncoated portion to a lower end of the electrode tab or from an upper end of the second electrode uncoated portion to the lower end of the electrode tab, and L₂ is a length between the upper end and a lower end of the first electrode uncoated portion or the length between the upper end and a lower end of the second electrode uncoated portion.

4. The secondary battery as claimed in any one of claims 1 to 3, wherein a thickness (T2) of the adhesive region is in a range of 0.1*T1 ≤ T2 ≤ 1.5*T1, where T1 is a thickness of the electrode tab.

5. The secondary battery as claimed in any one of claims 1 to 4, wherein a thickness of the non-adhesive region is smaller than a thickness of the adhesive region.

6. The secondary battery as claimed in any one of claims 1 to 5, wherein the adhesive region is at an outer peripheral portion of the non-adhesive region.

7. The secondary battery as claimed in any one of claims 1 to 6, wherein the non-adhesive region is a portion of the insulation member having no adhesive formed therein or having no adhesive force, and the adhesive region is a remaining region of the insulation member having an adhesive formed therein or having an adhesive force.

8. The secondary battery as claimed in any one of claims 1 to 7, wherein the non-adhesive region comprises a film having no adhesive formed therein or having no adhesive force, and wherein the adhesive region comprises a film having an adhesive formed therein or having an adhesive force.

9. The secondary battery as claimed in any one of claims 1 to 8, wherein the insulation member is on an upper surface of the first electrode plate and covers the electrode tab, the first electrode uncoated portion, and a portion of the first active material coated portion, or wherein the insulation member is on an upper surface of the second electrode plate and covers the electrode tab, the second electrode uncoated portion, and a portion of the second active material coated portion.

10. The secondary battery as claimed in any one of claims 1 to 8, wherein the insulation member is on an upper surface of the first electrode plate and covers the electrode tab, the first electrode uncoated portion, and a portion of the first active material coated portion, and wherein the insulation member has a same shape on a lower surface opposite to the upper surface of the first electrode plate at a position corresponding to the upper surface of the first electrode plate, or
wherein the insulation member is on an upper surface of the second electrode plate and covers the electrode tab, the second electrode uncoated portion, and a portion of the second active material coated portion, and wherein the insulation member has a same shape on a lower surface opposite to the upper surface of the second electrode plate at a position corresponding to the upper surface of the second electrode plate.

11. A method of forming the secondary battery as claimed in any one of claims 1 to 10, the method comprising forming the insulation member by applying an adhesive to a film in which a mask pattern of a preset size is aligned at a preset position on one side of the film, wherein the non-adhesive region is formed at a location of the film corresponding to the mask pattern, and wherein the adhesive region is formed at a location of the film where the mask pattern is not applied.

12. The method as claimed in claim 11, wherein the film comprises polyimide (PI), polyethylene terephthalate (PET), or polypropylene (PP).

13. A method of forming the secondary battery as claimed in any one of claims 1 to 10, the method comprising:
applying an adhesive to a film;
attaching the film to the first electrode plate or the second electrode plate; and
removing a portion of the adhesive by applying or inserting a release material.

14. The method as claimed in claim 13, wherein the release material is prepared in the form of a liquid or film comprising at least one of silicon-based, amide-based, ceramic-based, or fluorine-based materials.

15. The method as claimed in claim 13 or claim 14, wherein the film comprises polyimide (PI), polyethylene terephthalate (PET), or polypropylene (PP).
